# EUROPEAN PATENT APPLICATION

(11) **EP 4 844 613 A1**
(43) Date of publication of application: **25.11.2026**
(21) Application number: 26174720.8
(22) Date of filing: 27.04.2026
(51) Int. Cl.: G06F 21/57, G06F 12/14, G06F 21/12, G06F 21/60

(54) **SYSTEM AND METHOD FOR PROTECTING PROPRIATERY FIRMWARE FROM REVERSE ENGINEERING, TAMPER AND/OR THEFT**

(30) Priority: 19.05.2025 US 202519211978
(71) Applicant: Honeywell International Inc., Charlotte, NC 28202 (US)
(72) Inventor: MATHEW, Mithun, Charlotte, 28202 (US); SAMUDRALA, Prasad, Charlotte, 28202 (US)
(74) Representative: Haseltine Lake Kempner LLP

(57) **Abstract**

A method and system for executing instructions stored in non-volatile memory by a System on a Chip (SoC). The SoC includes a CPU, RAM, and a One-Time-Programmable storage location storing an encryption key. Non-encrypted instructions implementing functions, including a load RAM function, are stored in non-volatile memory along with encrypted instructions implementing encrypted functions. The SoC executes the load RAM function to copy encrypted instructions to a designated firmware region in a RAM of the SoC, decrypt the encrypted instructions using the stored encryption key, and store decrypted instructions in the RAM. The SoC then Execute-In-Place (XIP) the non-encrypted instructions from the non-volatile memory and the decrypted functions from the RAM to control a building control device.

## Description

### TECHNICAL FIELD

The present disclosure relates to firmware, and more particularly to systems and methods for protecting proprietary firmware from reverse engineering, tamper and/or theft.

### BACKGROUND

A variety of electronic devices include firmware stored on an external flash memory for use by the electronic device. In some cases, the firmware includes proprietary code. One way to protect the proprietary firmware is to simply encrypt the firmware that is stored in the external flash memory. However, this requires that the electronic device have an in-built decryption engine that is capable of decrypting the encrypted firmware in real time to thereby allow the decrypted firmware to be run during the boot process of the electronic device. Not every electronic device is capable of supporting an in-built decryption engine. Moreover, adding an in-built decryption engine can increase the cost and/or complexity of the electronic device. What would be desirable are systems and methods for protecting proprietary firmware stored in an external flash memory from reverse engineering, tamper and/or theft while not requiring that the electronic device have an in-built decryption engine.

### SUMMARY

The present disclosure relates to firmware, and more particularly to systems and methods for protecting proprietary firmware from reverse engineering, tamper and/or theft. An example may be found in a method for executing instructions that are stored in a non-volatile memory by a System on a Chip (SoC). The SoC includes a Central Processing Unit (CPU), a Random Access Memory (RAM) operatively coupled to the CPU, and a One-Time-Programmable (OTP) storage location operatively coupled to the CPU storing an encryption key. The method includes storing non-encrypted firmware instructions in the non-volatile memory that implement one or more non-encrypted functions including a load RAM function. Encrypted instructions are stored in the non-volatile memory, where the encrypted instructions implement one or more encrypted functions. The load RAM function of the non-encrypted functions is executed by the SoC. The load RAM function may include one or more functions that cause the SoC to read the encrypted instructions from the non-volatile memory, decrypt the encrypted instructions using the encryption key that is stored at the One-Time-Programmable (OTP) storage location of the SoC, and store the decrypted instructions in the RAM of the SoC. The SoC is configured to execute one or more non-encrypted functions stored in the non-volatile memory and one or more decrypted functions stored in the RAM of the SoC to at least partially control a building control device.

Another example may be found in a system. The illustrative system includes a Central Processing Unit (CPU), a Random Access Memory (RAM) that is operatively coupled to the CPU, a One-Time-Programmable (OTP) storage location that is operatively coupled to the CPU storing an encryption key, and a non-volatile memory that is operatively coupled to the CPU. The non-volatile memory stores a plurality of non-encrypted instructions that implement one or more non-encrypted functions including a load RAM function, and a plurality of encrypted instructions that implement one or more encrypted functions. The CPU is configured to execute the load RAM function of the non-encrypted functions. The load RAM function causes the CPU to read the encrypted instructions from the non-volatile memory, decrypt the encrypted instructions using the encryption key that is stored at the One-Time-Programmable (OTP) storage location, and store the decrypted instructions in the RAM. The CPU is configured to execute one or more non-encrypted functions stored in the non-volatile memory and one or more decrypted functions stored in the RAM to at least partially control a building control device.

Another example may be found in a non-transitory computer readable medium storing instructions. When the instructions are executed by one or more processors, the one or more processors are caused to execute a load RAM function of a plurality of non-encrypted functions that are stored in a non-volatile memory. The load RAM function reads encrypted instructions stored in the non-volatile memory, decrypts the encrypted instructions using an encryption key, and stores the decrypted instructions in a RAM. The one or more processors are caused to execute one or more non-encrypted functions stored in the non-volatile memory and one or more decrypted instructions stored in the RAM to at least partially control a building control device.

The preceding summary is provided to facilitate an understanding of some of the features of the present disclosure and is not intended to be a full description. A full appreciation of the disclosure can be gained by taking the entire specification, claims, drawings, and abstract as a whole.

### BRIEF DESCRIPTION OF THE DRAWINGS

The disclosure may be more completely understood in consideration of the following description of various illustrative embodiments of the disclosure in connection with the accompanying drawings, in which:
Figure 1 is a schematic block diagram showing an illustrative system;
Figure 2 is a flow diagram showing an illustrative method for executing instructions; and
Figure 3 is a flow diagram showing an illustrative series of steps that may be carried out by one or more processors that are executing instructions stored on a non-transient, computer-readable storage medium.

While the disclosure is amenable to various modifications and alternative forms, specifics thereof have been shown by way of example in the drawings and will be described in detail. It should be understood, however, that the intention is not to limit aspects of the disclosure to the particular illustrative embodiments described. On the contrary, the intention is to cover all modifications, equivalents, and alternatives falling within the spirit and scope of the disclosure.

### DESCRIPTION

The following description should be read with reference to the drawings wherein like reference numerals indicate like elements. The drawings, which are not necessarily to scale, are not intended to limit the scope of the disclosure. In some of the figures, elements not believed necessary to an understanding of relationships among illustrated components may have been omitted for clarity.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic may be applied to other embodiments whether or not explicitly described unless clearly stated to the contrary.

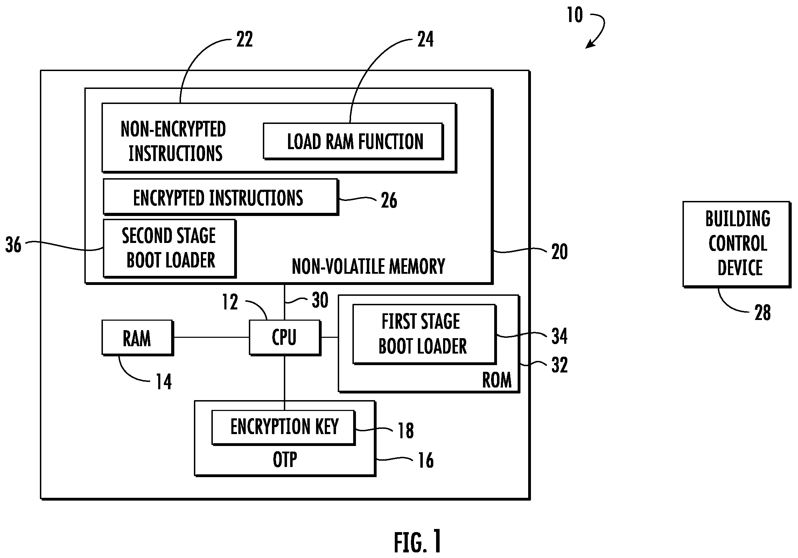

Figure 1 is a schematic block diagram showing an illustrative system 10. The illustrative system 10 includes a Central Processing Unit (CPU) 12. A Random Access Memory (RAM) 14 is operatively coupled to the CPU 12. A One-Time-Programmable (OTP) storage location 16 is operatively coupled to the CPU 12. In this example, the OTP storage location 16 stores one or more encryption keys 18. A non-volatile memory 20 is operatively coupled to the CPU 12. The non-volatile memory 20 is configured to store a plurality of non-encrypted instructions 22 that implement one or more non-encrypted functions including a load RAM function 24. The non-volatile memory 20 is configured to store a plurality of encrypted instructions 26 that implement one or more encrypted functions.

The CPU 12 is configured to execute the load RAM function 24 of the non-encrypted functions. The load RAM function 24 causing the CPU 12 to read the encrypted instructions 26 from the non-volatile memory 20, decrypt the encrypted instructions 26 using one of the encryption keys 18 that is stored at the One-Time-Programmable (OTP) storage location 16, and store the decrypted instructions in the RAM 14. In some cases, the non-encrypted functions stored in the non-volatile memory 20 include one or more decryption functions that are used by the CPU 12 to decrypt the encrypted instructions 26 stored in the non-volatile memory 20 using one of the one or more encryption keys 18 stored in the OTP storage location 16. The CPU 12 is configured to execute one or more non-encrypted functions from the non-volatile memory 20 and one or more decrypted functions from the RAM 14 to at least partially control a building control device 28. The building control device 28 may be part of an HVAC (Heating, Ventilating and Air Conditioning) system, a security system, an access control system, a lighting system, or others. The building control device 28 may include an IoT device, for example.

In some cases, the CPU 12, the RAM 14, and the OTP storage location 16 may be components of a System on a Chip (SoC). In some cases, the non-volatile memory 20 may be operatively coupled to the CPU 12 via a synchronous serial communication bus 30. In some cases, the non-volatile memory 20 may be operatively coupled to the CPU 12 via a parallel communication bus 30.

In some cases, the non-encrypted instructions 22 and the encrypted instructions 26 that are both stored in the non-volatile memory 20 may collectively represent firmware for the CPU 12. In some cases, at least some of the encrypted instructions 26 may implement a messaging protocol that is used for communicating with a remote device such as a building control device 28. In some cases, at least some of the non-encrypted instructions 22 may include instructions that implement the load RAM function 24, including one or more decryption functions that are used by the CPU 12 to decrypt the encrypted instructions 26 stored in the non-volatile memory 20 using one or more of the encryption keys 18 stored in the OTP storage location 16. In some cases, at least some of the non-encrypted instructions 22 may include instructions that implement one or more of operating system instructions for the SoC, open source library instructions for the SoC, display driver instructions for the SoC, WPA (Wi-Fi Protected Access) supplicant instructions for the SoC, non-proprietary control logic, and peripheral driver instructions for the SoC, among others. In some cases, at least some of the encrypted instructions 26 include instructions that implement one or more proprietary functions for the SoC, such as propriety control logic/algorithm, proprietary communication protocols, propriety drivers and/or any other proprietary functions.

In some cases, the system 10 may include a ROM 32. In some cases, the ROM 32 may store a first stage boot loader 34. The CPU 12 may be configured to execute the first stage boot loader 34 upon power up. The first stage boot loader 34 may determine whether a signature of a second stage boot loader 36 that is present on the non-volatile memory 20 matches an expected signature calculated using one or more of the encryption keys 18 present in the OTP storage location 16. If so, the first stage boot loader 34 may validate the second stage boot loader 36 contents on the non-volatile memory 20. In some cases, the second stage boot loader 36 may be separate from the non-encrypted instructions 22 and the encrypted instructions 26. In some cases, the first stage boot loader 34 allows the CPU 12 to execute the second stage boot loader 36 after successful validation. The second stage boot loader 36 will validate the non-encrypted instructions 22 using the encryption key 18 present in the OTP 16. On successful validation of the non-encrypted instructions 22, the second stage boot loader 36 may then allow the CPU 12 to Execute-In-Place (XIP) the plain text non-encrypted instructions 22. The non-encrypted instructions 22 may include a load RAM function, that when executed by the CPU 12, causes the CPU 12 to copy the encrypted instructions 26 from the non-volatile memory 20 to a designated firmware region in the RAM 14, decrypt the encrypted instructions 26 using one or more of the encryption keys 18 that is stored at the One-Time-Programmable (OTP) storage location 16, and store the decrypted functions in the RAM 14. The CPU 12 is configured to execute one or more non-encrypted functions from the non-volatile memory 20 and one or more decrypted functions from the RAM 14 to at least partially control a building control device 28.

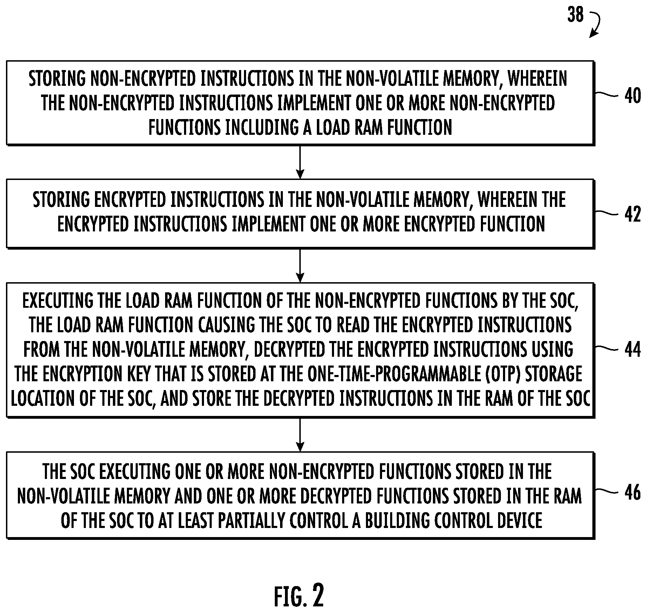

Figure 2 is a flow diagram showing an illustrative method 38 for executing instructions that are stored in a non-volatile memory by a System on a Chip (SoC), wherein the SoC includes a Central Processing Unit (CPU) (such as the CPU 12), a Random Access Memory (RAM) (such as the RAM 14) operatively coupled to the CPU, and a One-Time-Programmable (OTP) storage location (such as the OTP storage location 16) operatively coupled to the CPU storing an encryption key (such as one or more of the encryption keys 18). The illustrative method 38 includes storing non-encrypted instructions in the non-volatile memory, wherein the non-encrypted instructions implement one or more non-encrypted functions including a load RAM function, as indicated at block 40. Encrypted instructions are also stored in the non-volatile memory, where the encrypted instructions implement one or more encrypted functions, as indicated at block 42. The load RAM function of the non-encrypted functions is executed by the SoC. The load RAM function causing the SoC to read the encrypted instructions from the non-volatile memory, decrypt the encrypted instructions using the encryption key that is stored at the One-Time-Programmable (OTP) storage location of the SoC, and store the decrypted instructions in the RAM of the SoC, as indicated at block 44. The SoC executes one or more non-encrypted functions stored in the non-volatile memory and one or more decrypted functions stored in the RAM of the SoC to at least partially control a building control device (such as the building control device 28), as indicated at block 46.

In some cases, the non-encrypted instructions and the encrypted instructions stored in the non-volatile memory may collectively be referred to as the firmware for the SoC. At least some of the encrypted instructions may implement a messaging protocol that is used by the SoC for communicating with a remote device. In some cases, at least some of the encrypted instructions 26 include instructions that implement one or more proprietary functions for the SoC, such as propriety control logic/algorithm, proprietary communication protocols, propriety drivers and/or any other proprietary functions. These are just examples. The non-encrypted instructions may include instructions that implement the load RAM function and one or more of operating system instructions for the SoC, open source library instructions for the SoC, non-proprietary control logic, display driver instructions for the SoC, WPA supplicant instructions for the SoC, non-proprietary control logic, and peripheral driver instructions for the SoC. These are just examples.

In some cases, the non-volatile memory may include a FLASH memory. The SoC may be operatively coupled to the FLASH memory via a synchronous communication bus, a parallel communication bus and/or any other suitable communication link. In some cases, the OTP storage location may include an EEPROM. In some cases, the OTP storage location may include a plurality of Electronic Fuses (eFuses) that can be electronically blown in a pattern to represent the encryption key, and the state of the eFuses can be read by the CPU to read the encryption key. These are just examples.

In some cases, the SoC may include a ROM that stores a first stage boot loader, and a certificate or a public key stored in the OTP storage location, wherein the SoC is configured to execute the first stage boot loader upon power up. The first stage boot loader determines whether a signature of the second stage boot loader present on the non-volatile memory matches an expected signature calculated using the public key present in the OTP storage location, and if so, validates the second stage boot loader contents on the non-volatile memory. In some cases, the non-volatile memory may store instructions that implement a second stage boot loader, and the first stage boot loader may direct the CPU to execute the second stage boot loader stored in the non-volatile memory after the first stage boot loader validates the non-volatile memory. In some cases, the second stage boot loader may be configured to validate a signature of a memory image that represents the non-encrypted instructions and the encrypted instructions stored in the non-volatile memory, and once validated, causes the CPU to execute the non-encrypted instructions in the non-volatile memory including the load RAM function. The load RAM function, that when executed by the CPU, causes the CPU to read the encrypted instructions from the non-volatile memory, decrypt the encrypted instructions using the encryption key that is stored at the One-Time-Programmable (OTP) storage location, and store the decrypted functions in the RAM. The CPU is configured to execute one or more non-encrypted functions from the non-volatile memory and one or more decrypted functions from the RAM to at least partially control a building control device.

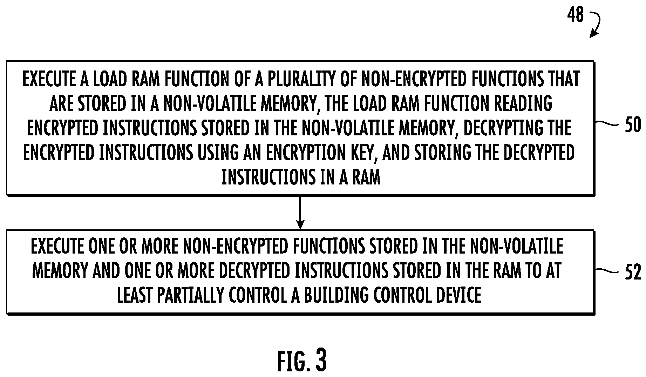

Figure 3 is a flow diagram showing an illustrative series of steps 48 that may be carried out by one or more processors that are executing instructions stored on a non-transient, computer-readable storage medium. The one or more processors may be part of the CPU 12, for example. The one or more processors are caused to execute a load RAM function of a plurality of non-encrypted functions that are stored in a non-volatile memory. The load RAM function reading encrypted instructions stored in the non-volatile memory, decrypting the encrypted instructions using an encryption key, and storing the decrypted instructions in a RAM, as indicated at block 50. The one or more processors are caused to execute one or more non-encrypted functions stored in the non-volatile memory and one or more decrypted instructions stored in the RAM to at least partially control a building control device, as indicated at block 52.

In some cases, at least some of the encrypted instructions implement a messaging protocol that is used for communicating with a remote device. In some cases, at least some of the encrypted instructions implement one or more proprietary functions for the SoC, such as propriety control logic/algorithm, proprietary communication protocols, propriety drivers and/or any other proprietary functions. In some cases, at least some of the non-encrypted functions that are stored in the non-volatile memory include instructions that implement the load RAM function and one or more of operating system instructions for the SoC, open source library instructions for the SoC, proprietary functions for the SoC, display driver instructions for the SoC, WPA supplicant instructions for the SoC, non-proprietary control logic and peripheral driver instructions for the SoC. In some cases, the one or more processors may be part of a System on a Chip (SoC).

Those skilled in the art will recognize that the present disclosure may be manifested in a variety of forms other than the specific embodiments described and contemplated herein. Accordingly, departure in form and detail may be made without departing from the scope and spirit of the present disclosure as described in the appended claims.

## Claims

1. A method for executing instructions that are stored in a non-volatile memory by a System on a Chip (SoC), wherein the SoC includes a Central Processing Unit (CPU), a Random Access Memory (RAM) operatively coupled to the CPU, and a One-Time-Programmable (OTP) storage location operatively coupled to the CPU storing an encryption key, the method comprising:
storing non-encrypted instructions in the non-volatile memory, wherein the non-encrypted instructions implement one or more non-encrypted functions including a load RAM function;
storing encrypted instructions in the non-volatile memory, wherein the encrypted instructions implement one or more encrypted functions;
executing the load RAM function of the non-encrypted functions by the SoC, the load RAM function causing the SoC to read the encrypted instructions from the non-volatile memory, decrypted the encrypted instructions using the encryption key that is stored at the One-Time-Programmable (OTP) storage location of the SoC, and store the decrypted instructions in the RAM of the SoC; and
the SoC executing one or more non-encrypted functions stored in the non-volatile memory and one or more decrypted functions stored in the RAM of the SoC to at least partially control a building control device.

2. The method of claim 1, wherein the building control device comprises an IoT device.

3. The method of any preceding claim, wherein the non-encrypted instructions and the encrypted instructions stored in the non-volatile memory collectively comprise firmware for the SoC.

4. The method of any preceding claim, wherein at least some of the encrypted instructions implement a messaging protocol that is used by the SoC for communicating with a remote device.

5. The method of any preceding claim, wherein the non-encrypted instructions include instructions that implement the load RAM function and one or more of:
operating system instructions for the SoC;
open source library instructions for the SoC;
proprietary functions for the SoC;
display driver instructions for the SoC;
WPA supplicant instructions for the SoC;
non-proprietary control logic; and
peripheral driver instructions for the SoC.

6. The method of any preceding claim, wherein the non-volatile memory comprises a FLASH memory.

7. The method of claim 6, wherein the SoC is operatively coupled to the FLASH memory via a synchronous communication bus.

8. The method of any preceding claim, wherein the One-Time-Programmable (OTP) storage location comprises an EEPROM.

9. The method of any preceding claim, wherein the One-Time-Programmable (OTP) storage location comprises a plurality of Electronic Fuses (eFuses) that can be electronically blown in a pattern to represent the encryption key, and the state of the eFuses can be read by the CPU to read the encryption key.

10. The method of any preceding claim, wherein the SoC includes a ROM that stores a first stage boot loader, and a certificate or a public key stored in the OTP storage location, wherein the SoC is configured to execute the first stage boot loader upon power up, wherein the first stage boot loader determines whether a signature of the second stage boot loader present on the non-volatile memory matches an expected signature calculated using the public key present in the OTP storage location, and if so, validates the second stage boot loader contents on the non-volatile memory.

11. The method of claim 10, wherein the non-volatile memory stores a second stage boot loader, wherein the first stage boot loader directs the CPU to execute the second stage boot loader stored in the non-volatile memory after the first stage boot loader validates the non-volatile memory.

12. The method of claim 11, wherein the second stage boot loader is configured to validate a signature of a memory image that represents the non-encrypted instructions and the encrypted instructions stored in the non-volatile memory, and once validated, causes the CPU to execute the non-encrypted instructions in the non-volatile memory including the load RAM function.

13. A system comprising:
a Central Processing Unit (CPU);
a Random Access Memory (RAM) operatively coupled to the CPU;
a One-Time-Programmable (OTP) storage location operatively coupled to the CPU storing an encryption key;
a non-volatile memory operatively coupled to the CPU, the non-volatile memory storing:
a plurality of non-encrypted instructions that implement one or more non-encrypted functions including a load RAM function;
a plurality of encrypted instructions that implement one or more encrypted functions;
the CPU is configured to:
execute the load RAM function of the non-encrypted functions, the load RAM function causing the CPU to read the encrypted instructions from the non-volatile memory, decrypted the encrypted instructions using the encryption key that is stored at the One-Time-Programmable (OTP) storage location, and store the decrypted instructions in the RAM; and
execute one or more non-encrypted functions stored in the non-volatile memory and one or more decrypted functions stored in the RAM to at least partially control a building control device.

14. The system of claim 13, wherein the CPU, RAM and OTP storage location are components of a System on a Chip (SoC).

15. A non-transitory computer readable medium storing instructions that when executed by one or more processors cause the one or more processors to:
execute a load RAM function of a plurality of non-encrypted functions that are stored in a non-volatile memory, the load RAM function reading encrypted instructions stored in the non-volatile memory, decrypting the encrypted instructions using an encryption key, and storing the decrypted instructions in a RAM; and
execute one or more non-encrypted functions stored in the non-volatile memory and one or more decrypted instructions stored in the RAM to at least partially control a building control device.
